# EUROPEAN PATENT APPLICATION

(11) **EP 4 786 279 A1**
(43) Date of publication of application: **05.08.2026**
(21) Application number: 26153673.4
(22) Date of filing: 23.01.2026
(51) Int. Cl.: B60R 9/06, B60R 11/06

(54) **TRACTOR BOX PROVIDED WITH MEANS FOR A THREE-POINT HITCH**

(30) Priority: 29.01.2025 SI 202500010
(71) Applicant: Uniforest, D.o.o., 3312 Prebold (SI)
(72) Inventor: Skok, Tilen, 1420 Trbovlje (SI)
(74) Representative: Sveticic, Andrej

(57) **Abstract**

The invention relates to a tractor box provided with means for a three-point hitch to a tractor. The technical problem is how to provide a box which will provide, based on the user's respective needs, the opportunity to use the entire available internal volume and the opportunity to organize the items inside the box. The tractor box (100) of the invention comprises a first internal volume (10) defined by a base (1), a rear wall (2), a first front wall (3) arranged in plan-parallel to the rear wall (2), side walls (4a, 4b), and a lid (5); an oblong shelf (20) having two cylindrical hinge elements (25); and two shelf holders (30) arranged perpendicularly at the rear wall (2), each of the holders having a guide cut-out with a vertical section (31) and a first (32) and at least one second (33) vertical section, said first and second sections being perpendicular to the vertical section, the first transversal section (32) being arranged proximal to the base (1) and at least one second transversal section (33) being arranged at a distance from the box base.

## Description

### Field of invention

The invention relates to a tractor box provided with means for a three-point hitch, the box being configured for storing and transporting items, such as forestry tools, agricultural implements, etc.

### Prior Art

A tractor box provided with means for a three-point hitch for attaching to a front side of a tractor is known from prior art. The tractor box is intended for foresters, farmers, and other users to store and transport items, especially tools, to a work site. The tractor box can also be used as a container for ballast material, serving as a weight on the front hitch of the tractor. In a standard tractor box, the internal volume defined by a base, side walls, and a lid of the box, is uniform. The advantage of such a solution is that it allows for good exploitation of the available space, while the disadvantage is that the items stored in the box can move around freely during transport. The items collide with each other or rub against each other, which can cause damage. A box with a uniform volume also makes it practically impossible to organize the items inside the box. Searching for items in such a box is rather difficult.

A tractor box that partially eliminates the above-mentioned disadvantages is also known from prior art. The internal volume of this box is divided into several compartments by means of fixed internal partition walls. This makes it possible to organize the items inside the box, thus facilitating access to and searching for items in the box, while at the same time reducing the possibility of damage to items during transport. However, this solution reduces the available internal volume, which is a problem when larger items need to be stored in the box.

### Technical problem

The technical problem is how to provide a tractor box with means for a three-point hitch for attachment to a tractor, which will provide the opportunity to use the entire available internal volume of the box and the opportunity to organize the items inside the box based on the user's respective needs.

### Solution to the technical problem

The relative terms such as lower, upper, etc. are defined with respect to the orientation of the tractor box in the operating position, i. e. in the position when attached to the front side of a tractor.

The technical problem is solved by a tractor box provided with means for a three-point hitch for attachment to a tractor, comprising:
- a first internal volume defined by a box base, a box rear wall, a box first front wall arranged in plan-parallel to the box rear wall, a box side walls, and a lid,
- an oblong shelf having at least a shelf top side, two shelf lateral sides, shelf front and rear sides, the shelf further having two cylindrical hinge elements, the cylindrical hinge elements being arranged coaxially to project from the opposite shelf lateral sides each in a different direction and are positioned close to the shelf rear side, and
- two shelf holders arranged vertically at the box rear wall, each of the shelf holders having a holder guide cut-out having a vertical section of the guide cut-out, and a first and at least one second transversal section of the guide cut-out extending from the vertical section of the guide cut-out perpendicularly thereto in direction towards the box first front wall, the first transversal section of the guide cut-out being arranged proximal to the box base and at least one second transversal section of the guide cut-out being arranged at a height distant from the box base, the shelf holders being arranged plan parallel to each other and spaced from each other such that the cylindrical hinge elements of the shelf engage a respective guide cut-out of the holder.

When the shelf is in the top operating position and arranged in the horizontal plane, the cylindrical hinge elements are positioned in the end part of the second transversal section of the guide cut-out. The rear side of the shelf abuts against the rear wall of the box, which prevents the cylindrical hinge elements of the shelf from sliding into the vertical section of the guide cut-out of the shelf holders. When the user wants to move the shelf to the lower operating position, the shelf needs to be rotated about the cylindrical hinge elements to assume a vertical position, the shelf is then translated towards the vertical section of the guide cut-out, then downwards along the guide cut-out and then along the first transversal section of the guide cut-out to its end part. When the cylindrical hinge elements are in their end position, the user rotates the shelf around the hinges from the vertical position to the horizontal position.

The box of the invention allows the user to more flexibly use the internal volume of the box. When the shelf is in the vertical position and abutting against the rear wall of the box, the user has practically the entire internal volume of the box at their disposal; when the shelf is in the lower horizontal position, the situation is similar, however, there is some space available underneath the shelf, allowing the user to store some smaller items; when the shelf is in the upper horizontal position, the items in the internal volume of the box can be better organized. The advantage of the tractor box of the invention is to allow the user to more flexibly use the internal volume of the box. The flexibility of the box is further increased if there are several second transversal sections of the guide cut-out, which are positioned at different heights.

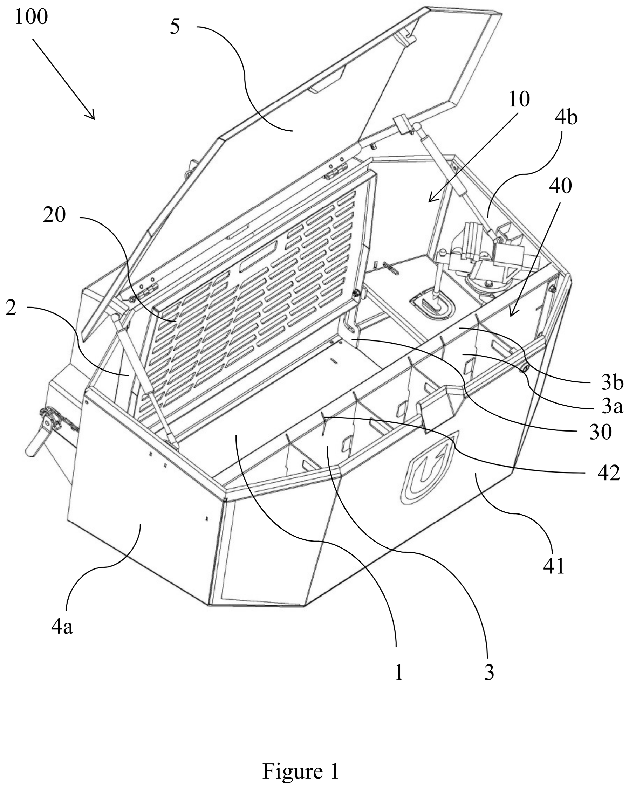

Figure 1: Tractor box with a shelf in the raised position

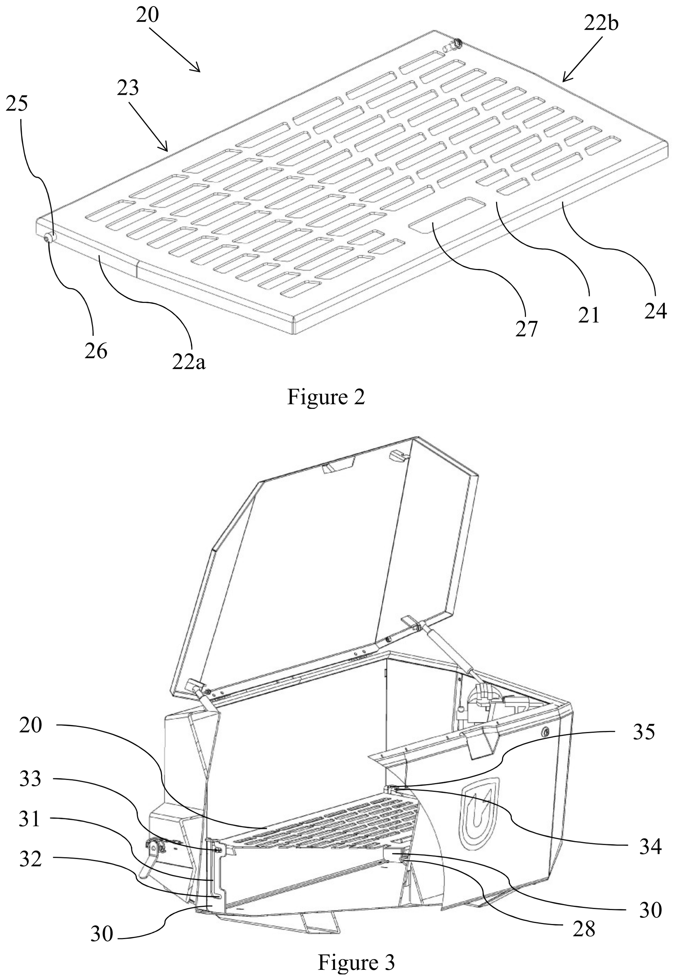

Figure 2: Shelf of the tractor box
Figure 3: Tractor box in cross-section

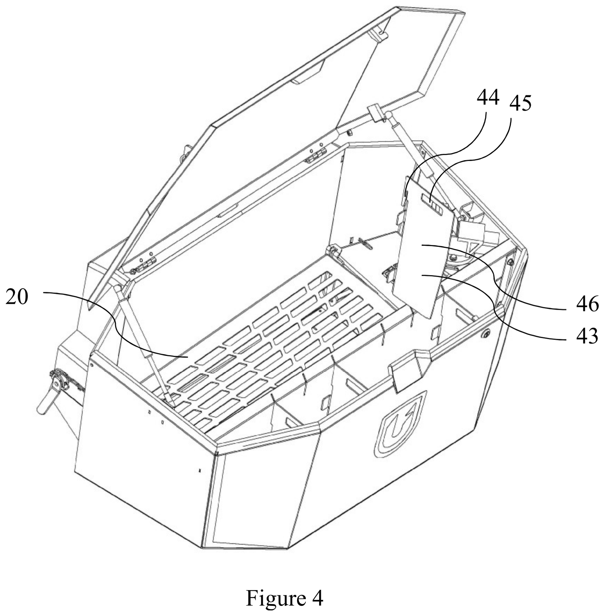

Figure 4: Tractor box with the shelf in the upper horizontal position and representation of a partition wall

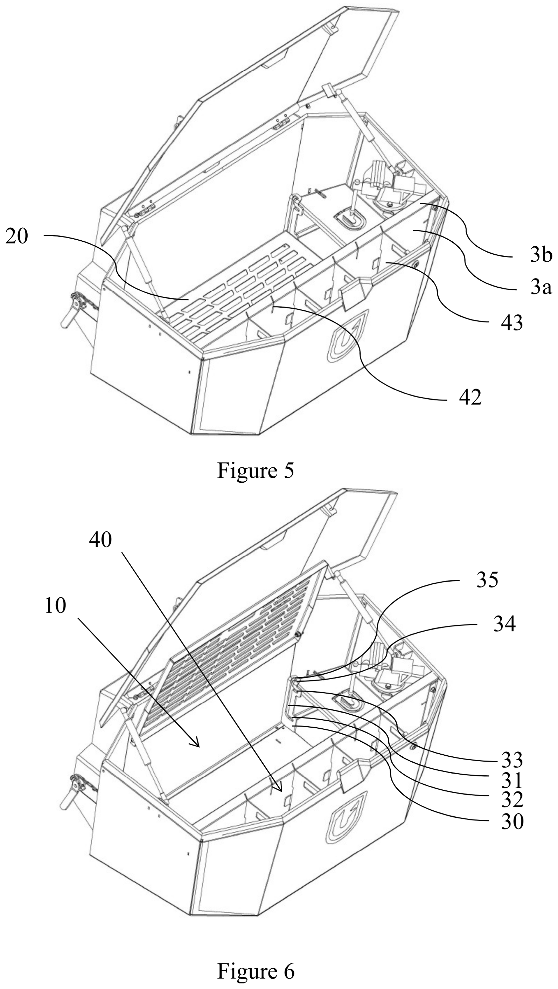

Figure 5: Tractor box with the shelf in the lower horizontal position
Figure 6: Tractor box with the shelf removed

The invention is described in more detail hereinbelow.

The technical problem is solved by a tractor box 100 provided with means for a three-point hitch for attachment to a tractor, comprising:
- a first internal volume 10 defined by a box base 1, a box rear wall 2, a box first front wall 3 arranged in plan-parallel to the box rear wall 2, a box side walls 4a, 4b, and a lid 5,
- an oblong shelf 20 having at least a shelf top side 21, two shelf lateral sides 22a, 22b, shelf front 24 and rear 23 sides, the shelf further having two cylindrical hinge elements 25, the cylindrical hinge elements being arranged coaxially to project from the opposite shelf lateral sides each in a different direction and are positioned close to the shelf rear side 23, and
- two shelf holders 30 arranged vertically at the box rear wall 2, each of the shelf holders having a holder guide cut-out having a vertical section 31 of the guide cut-out, and a first 32 and at least one second 33 transversal section of the guide cut-out extending from the vertical section of the guide cut-out perpendicularly thereto in direction towards the box first front wall 3, the first transversal section 32 of the guide cut-out being arranged proximal to the box base 1 and at least one second transversal section 33 of the guide cut-out being arranged at a height distant from the box base, the shelf holders being arranged plan parallel to each other and spaced from each other such that the cylindrical hinge elements 25 of the shelf engage a respective guide cut-out of the holder.

The lateral walls of the box can be configured as straight walls. Alternatively, the side walls 4a, 4b of the box may be formed of two or several sections arranged at an angle with respect to each other.

At its side facing the first internal volume 10, the box front wall 3 is provided at a height corresponding to the height of the first and the at least one second transversal section 32, 33 of the guide cut-out with a shelf support element 28.

In the area close to the shelf front side 24 which lies on the side opposite to that of the cylindrical hinge elements, the shelf is provided with a first grip means 27 to be gripped by the user, said means being formed in the shape of a handle, indentation or recess 27. The user grips the shelf easily and rotates it from the horizontal position to the vertical position and vice versa.

At their distal ends oriented each in a different direction, the cylindrical hinge elements 25 can be provided with a thickened element 26 on the circumference. The lateral side of a respective thickened element abuts against a respective outer face of the shelf holders 30, which improves guidance of the shelf in the guide cut-out sections 31, 32, 33 of the shelf holder.

The shelf holders 30 are preferably made of steel sheet. Upper ends 34 of the shelf holders are bent each in a different direction and provided with a through hole 35 that communicates with the vertical section 31 of the guide cut-out and is dimensioned in a way to allow a respective hinge element 25 of the shelf to pass through said through-hole. The user can thus remove the shelf from the box interior if needed.

The tractor box may further comprise a second internal volume 40 defined by a box base 1, a box first front wall 3, a box second front wall 41 arranged in plan-parallel to the box first front wall 3, a box side walls 4a, 4b, and a lid 5.

The box first front wall 3 may be made of steel sheet and have a first section 3a of the box first front wall that extends in the vertical direction, and a second section 3b of the box first front wall that extends at an angle with respect to said first section 3a in a direction towards the first internal volume of the box, preferably under an obtuse angle. In the contact area between the first and second sections of the first front wall of the box, the first front wall of the box may further be provided with a plurality of vertical notches 42. The tractor box may further comprise at least one partition wall 43 having a partition wall body 46, the outer contour of which substantially corresponds to the shape of the second internal volume 40 in cross-section, and a bulge 44 for insertion into one of the vertical notches 42 to fix the partition wall in position in the second internal volume 40 of the tractor box. The partition wall 43 is fixed in position by inserting the bulge 44 into one of the vertical notches 42, wherein the body 46 of the partition wall and the bulge 44 abut the first section 3a of the first front wall of the box each from one side. An additional internal volume is thus achieved that the user may arbitrarily divide, providing a plurality of smaller compartments for the storage of smaller items.

The partition wall may further be provided with a second grip means 45 to be gripped by the user, said means being formed in the shape of a handle, indentation or recess 45. The user can easily grip the partition wall and insert it into the second internal volume of the box or take it out of said volume.

## Claims

1. A tractor box (100) provided with means for a three-point hitch for attachment to a tractor, comprising:
- a first internal volume (10) defined by a box base (1), a box rear wall (2), a box first front wall (3) arranged in plan-parallel to the box rear wall (2), a box side walls (4a, 4b), and a lid (5),
- an oblong shelf (20) having at least a shelf top side (21), two shelf lateral sides (22a, 22b), shelf front (24) and rear (23) sides, the shelf further having two cylindrical hinge elements (25), the cylindrical hinge elements being arranged coaxially to project from the opposite shelf lateral sides each in a different direction and are positioned close to the shelf rear side (23), and
- two shelf holders (30) arranged vertically at the box rear wall (2), each of the shelf holders having a holder guide cut-out having a vertical section (31) of the guide cut-out, and a first (32) and at least one second (33) transversal section of the guide cut-out extending from the vertical section of the guide cut-out perpendicularly thereto in direction towards the box first front wall (3), the first transversal section (32) of the guide cut-out being arranged proximal to the box base (1) and at least one second transversal section (33) of the guide cut-out being arranged at a height distant from the box base, the shelf holders being arranged plan parallel to each other and spaced from each other such that the cylindrical hinge elements (25) of the shelf engage a respective guide cut-out of the holder.

2. Tractor box according to claim 1, **characterized in that** at its side facing the first internal volume (10), the box front wall (3) is provided at a height corresponding to the height of the first and the at least one second transversal section (32, 33) of the guide cut-out with a shelf support element (28).

3. Tractor box according to any of the previous claims, **characterized in that** in the area close to the shelf front side (24) which lies on the side opposite to that of the cylindrical hinge elements, the shelf is provided with a first grip means (27) to be gripped by the user, said means being formed in the shape of a handle, indentation or recess (27).

4. Tractor box according to any of the previous claims, **characterized in that** at their distal ends oriented each in a different direction, the cylindrical hinge elements (25) are provided with a thickened element (26) on the circumference, the lateral side of a respective thickened element abutting against a respective outer face of the shelf holders (30).

5. Tractor box according to any of the previous claims, **characterized by** further comprising a second internal volume (40) defined by a box base (1), a box first front wall (3), a box second front wall (41) arranged in plan-parallel to the box first front wall (3), a box side walls (4a, 4b), and a lid (5).

6. Tractor box according to any of the previous claims, **characterized in that** the shelf holders (30) are preferably made of steel sheet, the upper ends (34) of the shelf holders being bent each in a different direction and provided with a through hole (35) that communicates with the vertical section (31) of the guide cut-out and is dimensioned in a way to allow a respective hinge element (25) of the shelf to pass through said through-hole.

7. Tractor box according to claim 5 or 6, **characterized in that** the box first front wall (3) is made of steel sheet and has a first section (3a) of the box first front wall that extends in the vertical direction, and a second section (3b) of the box first front wall that extends at an angle with respect to said first section (3a) in a direction towards the first internal volume of the box, preferably under an obtuse angle, wherein, in the contact area between the first and second sections of the first front wall of the box, the first front wall of the box is provided with a plurality of vertical notches (42), the tractor box further comprising at least one partition wall (43) having a partition wall body (46), the outer contour of which substantially corresponds to the shape of the cross-section of the second internal volume (40), and a bulge (44) for insertion into one of the vertical notches (42) to fix the partition wall in position in the second internal volume (40) of the tractor box.

8. Tractor box according to claim 7, **characterized in that** the partition is further be provided with a second grip means (45) to be gripped by the user, said means being formed in the shape of a handle, indentation or recess (45).
